# EUROPÄISCHE PATENTSCHRIFT

(11) **EP 2 952 088 B1**
(45) Veröffentlichungstag und Bekanntmachung des Hinweises auf die Patenterteilung: **15.03.2017**
(21) Anmeldenummer: 15159129.4
(22) Anmeldetag: 16.03.2015
(51) Int. Cl.: A01D 69/00, A01D 43/08, A01D 69/03

(54) **Antriebssystem für eine selbstfahrende Erntemaschine**
Drive system for a self-propelled harvesting machine
Système d'entraînement d'une moissonneuse automotrice

(30) Priorität: 05.06.2014 DE 102014107921
(43) Veröffentlichungstag der Anmeldung: 09.12.2015
(73) Patentinhaber: CLAAS Selbstfahrende Erntemaschinen GmbH, 33428 Harsewinkel (DE)
(72) Erfinder: Besand, Christian, 33604 Bielefeld (DE); Krauß, Andreas, 97456 Pfändhausen (DE); Schiewer, Stefan, 32791 Lage (DE)

(56) Entgegenhaltungen:
- EP-A1- 1 875 793
- WO-A1-2013/018696

## Beschreibung

Die vorliegende Erfindung betrifft ein Antriebssystem für eine selbstfahrende Erntemaschine gemäß dem Oberbegriff des Anspruches 1 sowie einen Feldhäcksler gemäß dem Oberbegriff des Anspruches 11.

Ein Antriebssystem der eingangs genannten Art für eine selbstfahrende Erntemaschine umfasst einen als Verbrennungsmotor ausgeführten Antriebsmotor, ein von dem Antriebsmotor angetriebenes Verteilergetriebe mit einer an einer Antriebswelle angeordneten ersten Abtriebsriemenscheibe, welche mittels eines Riemens zumindest eine erste Antriebsriemenscheibe eines Arbeitsorganes, wie eine Häckseltrommel, treibt, sowie zumindest eine erste und eine zweite als Hydraulikpumpe ausgeführte Hydraulikeinheit zum Antrieb weiterer Arbeitsorgane, beispielsweise eines Vorsatzgerätes sowie eines Einzugsorgans der selbstfahrenden Erntemaschine.

Bei einem Antriebssystem ist vorgesehen, dass der Antrieb der ersten und zweiten Hydraulikpumpe beispielsweise durch jeweils ein Zahnradgetriebe erfolgt, welches mit dem Verteilergetriebe in Wirkverbindung steht oder durch jeweils eine vom Riemen angetriebene Antriebsriemenscheibe.

Alternativ erfolgt der Antrieb der beiden Hydraulikpumpen mittels einer in das Antriebssystem integrierten Vorgelegewelle oder durch eine zusätzliche Antriebsriemenscheibe. Die Vorgelegewelle beziehungsweise die Antriebsriemenscheibe treibt die erste Hydraulikpumpe an. Die erste und die zweite Hydraulikpumpe sind durch ein Zahnradgetriebe miteinander verbunden oder sie sind hintereinander angeordnet, so dass die erste Hydraulikpumpe auf die hinter ihr angeordnete zweite Hydraulikpumpe durchtreibt.

Die EP 1 875 793 A1 offenbart ein Antriebssystem gemäß dem Oberbegriff des Anspruchs 1.

Nachteilig an diesen Antriebssystemen ist es, dass bei einer Anordnung der Hydraulikpumpen hintereinander, bei der die erste Hydraulikpumpe auf die zweite Hydraulikpumpe durchtreibt, die Auswahlmöglichkeiten der verwendbaren Hydraulikpumpen auf Grund von Herstellerspezifikationen für diese Betriebsanordnung limitiert ist. Gemäß der alternativen Ausführung eines Antriebssystems, bei welchem die Antriebsleistung für die jeweilige Hydraulikpumpe separat dem Antriebsstrang entnommen wird, sind zusätzliche Komponenten erforderlich, wie Keilriemenscheiben, Zahnradgetriebe, Vorgelege, Vorgelegewelle und dergleichen mehr.

Der Erfindung liegt somit die Aufgabe zu Grunde, ein Antriebssystem sowie einen selbstfahrenden Feldhäcksler mit einem Antriebssystem bereitzustellen, welches sich durch einen einfachen Aufbau auszeichnet.

Diese Aufgabe wird erfindungsgemäß durch die kennzeichnenden Merkmale der unabhängigen Ansprüche 1 und 11 gelöst.

Vorteilhafte Weiterbildungen sind Gegenstand der Unteransprüche.

Gemäß dem Anspruch 1 wird vorgeschlagen, dass der Riemen mit einer Riemenscheibe trieblich verbunden ist, welche von einander gegenüberliegend angeordneten, relativ zu der Riemenscheibe feststehenden Gehäuseelementen abschnittsweise umgeben ist, an denen die erste Hydraulikeinheit und die zweite Hydraulikeinheit angeordnet sind, welche mit einer die Riemenscheibe durchdringenden Welle trieblich verbunden sind. Diese Anordnung erlaubt es, mittels einer Riemenscheibe beide Hydraulikeinheiten trieblich zu verbinden, ohne dass es zusätzlicher Antriebselemente bedarf beziehungsweise eine Restriktion bei der Auswahl der zu verwendenden Hydraulikeinheiten gegeben ist. Unter dem Begriff Hydraulikeinheit wird eine Hydraulikpumpe oder ein Hydraulikmotor verstanden. So ist es denkbar, mittels einer Riemenscheibe zwei als Hydraulikpumpen ausgeführte Hydraulikeinheiten anzutreiben, ohne dass es zusätzlicher Antriebselemente bedarf beziehungsweise eine Restriktion bei der Auswahl der zu verwendenden Pumpentypen gegeben ist. Eine erste Hydraulikpumpe und eine zweite Hydraulikpumpe können von der gemeinsamen Riemenscheibe angetrieben werden, sind jedoch im Übrigen unabhängig voneinander. Dies erlaubt frei wählbare Hydraulikpumpenkombinationen, was eine flexible Anpassung an die jeweils erforderliche Leistungsaufnahme der von diesen angetriebenen Arbeitsorganen ermöglicht. Weiterhin können die erste und die zweite Hydraulikeinheit als eine Kombination aus Hydraulikpumpe und Hydraulikmotor ausgeführt sein. Denkbar ist auch eine Ausführung als zwei Hydraulikmotoren. Diese Variante erlaubt den Antrieb des Reimens, der über die Riemenscheibe geführt ist.

Vorteilhafterweise kann die Welle in den Gehäuseelementen gelagert sein.

Bevorzugt kann die Welle einteilig ausgeführt sein. Die Welle ist durch eine Nabe mit den Hydraulikeinheiten trieblich verbunden. Eine durchgehende Welle ist fertigungstechnisch einfach darzustellen.

Alternativ kann die die Welle als Hohlwelle ausgeführt sein, die zwei separate Wellenabschnitte aufweist. Die Ausführung der Hohlwelle als zwei separate Wellenabschnitte hat den Vorteil, dass diese an der Riemenscheibe nachrüstbar beziehungsweise austauschbar ist.

Weiterhin können zumindest zwei Gehäuseelemente vorgesehen sein. Die Gehäuseelemente umschließen die beiden separaten Wellenabschnitte abschnittsweise.

Dabei kann der jeweilige Wellenabschnitt an einem Ende einen Flanschabschnitt aufweisen, der mit einem sich radial nach innen erstreckenden Steg an der Riemenscheibe verbunden ist. Hierzu können der Steg sowie die Flanschabschnitte in Umfangsrichtung verteilt angeordnete Durchbohrungen aufweisen, so dass die Hohlwellenabschnitte und die Riemenscheibe miteinander durch Schrauben verbindbar sind.

Vorzugsweise kann das jeweilige Gehäuseelement einen Lagerabschnitt aufweisen, welcher der Aufnahme eines Wälzlagers dient. Das Wälzlager kann auf den jeweiligen Wellenabschnitt aufgeschoben werden, nachdem die beiden Gehäuseelemente miteinander verbunden wurden.

Bevorzugt kann das jeweilige Gehäuseelement einen Befestigungsabschnitt aufweisen, der der Anordnung der ersten Hydraulikeinheit oder der zweiten Hydraulikeinheit dient. Der Befestigungsabschnitt kann derart ausgeführt sein, dass ein Gehäuse der ersten beziehungsweise der zweiten Hydraulikeinheit von dem Befestigungsabschnitt in Umfangsrichtung abschnittsweise umschlossen ist. Das Verbinden der jeweiligen Antriebswelle der ersten beziehungsweise der zweiten Hydraulikeinheit mit dem jeweiligen Wellenabschnitt wird verbessert, da eine Führung des Pumpengehäuses durch den Befestigungsabschnitt erreicht wird. Dies trägt zu einer höheren Laufgenauigkeit bei.

Insbesondere kann eines der beiden Gehäuseelemente einen sich in axialer Richtung, parallel zur Welle erstreckenden Verbindungsabschnitt aufweisen, der der Verbindung der beiden Gehäuseelemente miteinander dient. Der Verbindungsabschnitt erstreckt sich abschnittsweise in Umfangsrichtung der Riemenscheibe.

Des Weiteren kann auf der dem Verbindungsabschnitt gegenüberliegenden Seite ein Stützelement zwischen den beiden Gehäuseelementen angeordnet sein.

Dabei kann dem Stützelement eine Spannrolle zugeordnet sein. Die Spannrolle kann schwenkbar an dem Stützelement angelenkt sein. Die Spannrolle stützt sich mittels eines Spannsystems am Maschinengehäuse der Erntemaschine ab.

Weiterhin wird die eingangs gestellte Aufgabe durch einen selbstfahrenden Feldhäcksler mit einem Antriebssystem nach einem der der Ansprüche 1 bis 10 gelöst.

Die vorliegende Erfindung wird nachstehend anhand eines in den Zeichnungen dargestellten Ausführungsbeispieles näher erläutert.

Es zeigen:
- Fig. 1: eine schematische Ansicht eines selbstfahrenden Erntemaschine;
- Fig. 2: eine schematische Teilansicht eines Antriebssystems der Erntemaschine gemäß Fig.1;
- Fig. 3: eine Schnittansicht gemäß Fig. 2.

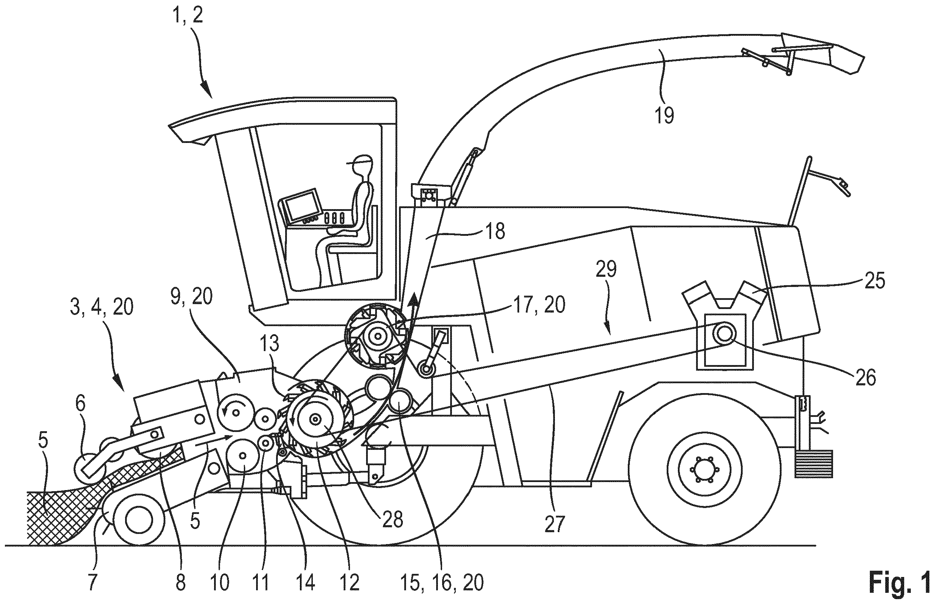

Fig. 1 zeigt eine als Feldhäcksler 2 ausgeführte landwirtschaftliche Erntemaschine 1, die in ihrem frontseitigen Bereich ein als Pick-up 4 ausgeführtes Vorsatzgerät 3 aufnimmt. Die Pick-up 4 ist so gestaltet, dass sie einen Erntegutstrang 5 zwischen einer Niederhaltereinrichtung 6 und einer Aufsammeltrommel 7 aufnimmt und im rückwärtigen Bereich der Pick-up 4 einer Querförderschnecke 8 zuführt. Die Querförderschnecke 8 übergibt das Erntegut 5 nahezu mittig der Pick-up 4 nachgeordneten Einzugsorganen 9. Im dargestellten Ausführungsbeispiel werden die Einzugsorgane 9 von paarweise angeordneten Einzugswalzen 10 und diesen nachgeordneten Vorpresswalzen 11 gebildet. Nachdem der Erntegutstrang 5 die Einzugsorgane 9 passiert hat, wird er in deren rückwärtigen Bereich an eine Häckseltrommel 12 übergeben. Die Häckseltrommel 12 nimmt an ihrem Umfang eine Vielzahl von Häckselmessern 13 auf, die den Erntegutstrang 5 im Zusammenwirken mit einer Gegenschneide 14 zerkleinert. Durch die kinetische Energie der umlaufenden Häckseltrommel 12 tritt der Erntegutstrang 5 im rückwärtigen Bereich der Häckseltrommel 12 mit hoher Geschwindigkeit aus dieser aus und wird an paarweise angeordnete Crackerwalzen 15 übergeben. Die Crackerwalzen 15 bilden dabei eine sogenannte Nachzerkleinerungseinrichtung 16. Nachdem der Erntegutstrang 5 die Nachzerkleinerungseinrichtung 16 passiert hat, gelangt er in den Wirkbereich eines Nachbeschleunigers 17. Der Nachbeschleuniger 17 prägt dem Erntegutstrang 5 in an sich bekannter Weise zusätzliche kinetische Energie auf, mittels derer der Erntegutstrang 5 über einen in vertikaler Richtung weisenden Auswurfschacht 18 und einen diesem nachgeordneten schwenk- und drehbeweglichen Auswurfkrümmer 19 aus dem Feldhäcksler 2 herausgefördert wird. Im dargestellten Ausführungsbeispiel bilden das Vorsatzgerät 3, die Einzugsorgane 9, die Häckseltrommel 12, die Nachzerkleinerungseinrichtung 16, sowie der Nachbeschleuniger 17 die Arbeitsorgane 20 der landwirtschaftlichen Erntemaschine 1.

Weiter ist dem Feldhäcksler 2 ein Antriebssystem 29 mit zumindest einem Antriebsmotor 25 zugeordnet, dessen Abtriebsriemenscheibe 26 von einem Antriebsriemen 27 umschlungen ist. Der Antriebsriemen 27 bildet in an sich bekannter Weise einen Hauptantriebsriemen zum Antrieb der verschiedenen zuvor beschrieben Arbeitsorgane 20 des Feldhäckslers 2. Eine Antriebsriemenscheibe 28, die dem Antrieb der Häckseltrommel 12 dient, ist durch den Antriebsriemen 27 trieblich mit dem Antriebsmotor 25 verbunden.

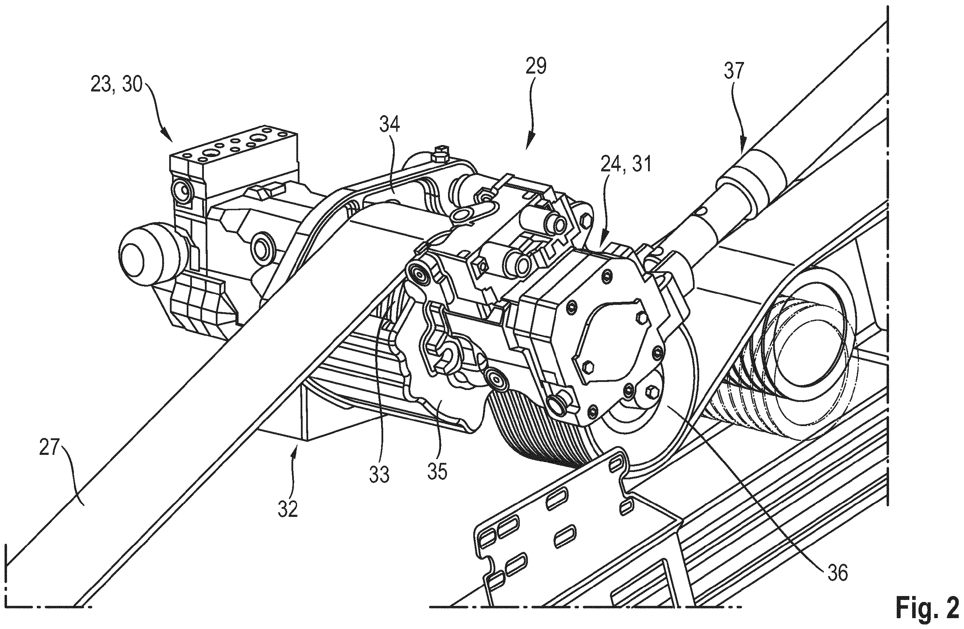

In Fig. 2 ist eine schematische Teilansicht des Antriebssystems 29 der Erntemaschine 1 gemäß Fig.1 dargestellt. In das Antriebssystem 29 ist eine Riemenscheibe 33 integriert, die in dem dargestellten Ausführungsbeispiel dem Antrieb einer ersten Hydraulikeinheit 23 und einer zweiten Hydraulikeinheit 24, einer ersten Hydraulikpumpe 30 und einer zweiten Hydraulikpumpe 31, dient. Eine Spannrolle 36 sorgt für eine für den Antrieb ausreichende Riemenspannung. Die Spannrolle 36 stützt sich mittels eines Spannsystems 37 am Maschinengehäuse des Feldhäckslers 2 ab. Die erste Hydraulikpumpe 30 dient dem Antrieb des Einzugsorganes 9, die zweite Hydraulikpumpe 31 dient dem Antrieb des Vorsatzgerätes 3. Die Riemenscheibe 33 ist abschnittsweise von einem mehrteiligen Gehäuse 32 umfasst. Das Gehäuse 32 umfasst ein erstes Gehäuseelement 34 und ein zweites Gehäuseelement 35, welche relativ zu der Riemenscheibe 33 feststehend angeordnet sind. Hierzu kann zumindest eines der Gehäuseelemente 34, 35 am Maschinenrahmen befestigt sein. Die erste und die zweite Hydraulikeinheit 23, 24 können auch als zwei Hydraulikmotoren oder als eine Kombination aus einer Hydraulikpumpe und einem Hydraulikmotor ausgeführt sein.

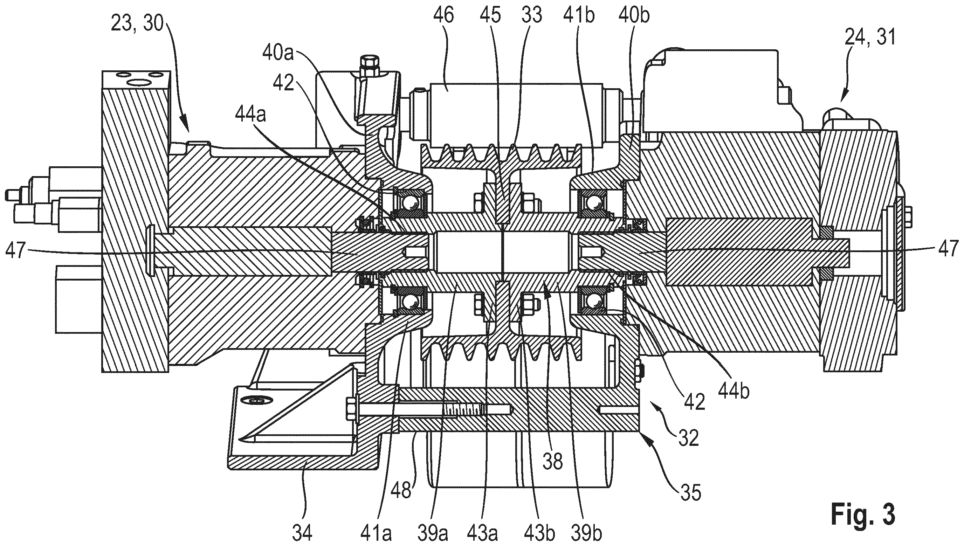

Die Darstellung in Fig. 3 zeigt eine schematisierte Schnittansicht gemäß Fig. 2 durch das Gehäuse 32 sowie die erste Hydraulikpumpe 30 und die zweite Hydraulikpumpe 31. Das erste Gehäuseelement 34 und das zweite Gehäuseelement 35 sind durch Schraubverbindungen miteinander lösbar verbunden. Hierzu ist ein Verbindungsabschnitt 48 vorgesehen, der die Riemenscheibe 33 abschnittsweise umschließt. Beide Gehäuseelemente 34, 35 weisen jeweils einen sich radial nach außen erstreckenden Befestigungsabschnitt 40a, 40b auf, welcher der Anordnung der jeweiligen ersten beziehungsweise zweiten Hydraulikpumpe 30, 31 dient. An dem jeweiligen Befestigungsabschnitt 40a, 40b stützt sich ein Pumpengehäuse der ersten beziehungsweise zweiten Hydraulikpumpe 30, 31 in radialer Richtung ab. Zudem weist der jeweilige Befestigungsabschnitt 40a, 40b eine an die Außenkontur des Pumpengehäuses angepasste, sich in axialer Richtung erstreckende Ausnehmung auf, so dass der jeweilige Befestigungsabschnitt 40a, 40b das Pumpengehäuse in Umfangsrichtung abschnittsweise umschließt.

Des Weiteren weisen das erste Gehäuseelement 34 und das zweite Gehäuseelement 35 einen sich in axialer Richtung erstreckenden Lagerabschnitt 41 a, 41 b auf, auf welchen jeweils ein Wälzlager 42 angeordnet ist. Die Riemenscheibe 33 ist von einer Welle 38 durchdrungen. Die Welle 38 kann einteilig ausgeführt sein. Im dargestellten Ausführungsbeispiel ist die Welle 38 als Hohlwelle 39 ausgeführt. Die Hohlwelle 39 umfasst zwei Wellenabschnitte 39a, 39b, an deren einem Ende jeweils ein Flanschabschnitt 43a, 43b vorgesehen ist. Die Riemenscheibe 33 weist einen im Wesentlichen mittig angeordneten, in radialer Richtung erstreckenden Steg 45 auf. An diesen Steg 45 sind die Wellenabschnitte 39a, 39b mittels des jeweiligen Flanschabschnittes 43a, 43b befestigt. Hierzu weisen der Steg 45 und die Flanschabschnitte 43a, 43b in Umfangsrichtung verteilt angeordnete Durchbohrungen auf, um die Wellenabschnitte 39a, 39b und die Riemenscheibe 33 miteinander verschrauben zu können. Das jeweilige freie Ende der Wellenabschnitte 39a, 39b dient der Aufnahme des jeweiligen Wälzlagers 42. Auf der Innenseite der freien Enden der Wellenabschnitte 39a, 39b ist jeweils eine Innenverzahnung 44a, 44b vorgesehen, welche mit einer korrespondierenden Außenverzahnung einer jeweiligen Antriebswelle 47 der ersten Hydraulikpumpe 30 beziehungsweise der zweiten Hydraulikpumpe 31 in Eingriff steht.

Die mehrteilige Ausführung von Gehäuse 32 und Hohlwelle 39 ermöglicht eine einfache Nachrüstung beziehungsweise einen einfachen Austausch einzelner Komponenten. Die das Gehäuse 32 und die Hohlwelle 39 beidseitig der Riemenscheibe 33 ermöglichende Anordnung der ersten Hydraulikpumpe 30 und der zweiten Hydraulikpumpe 31 bietet Bauraumvorteile insbesondere gegenüber einer Anordnung der Hydraulikeinheiten hintereinander. Zudem lassen sich die erste Hydraulikpumpe 30 und die zweite Hydraulikpumpe 31 unabhängig voneinander auswählen, so dass eine gesteigerte Effizienz gegeben ist. Die Kosten einer zusätzlichen Lagerstelle mit Leistungsabgriff entfallen.

Achsparallel zu der Hohlwelle 39 ist ein Stützelement 46 zwischen dem ersten und dem zweiten Gehäuseelement 34 und 35 angeordnet, welches diese miteinander verbindet. An dieses Stützelement 46 kann zudem die Spannrolle 36 schwenkbar angelenkt sein.

**Bezugszeichenliste**

| | | | |
|---|---|---|---|
| **1** | Erntemaschine | **30** | Erste Hydraulikpumpe |
| **2** | Feldhäcksler | **31** | Zweite Hydraulikpumpe |
| **3** | Vorsatzgerät | **32** | Gehäuse |
| **4** | Pick-up | **33** | Riemenscheibe |
| **5** | Erntegutstrang | **34** | Erstes Gehäuseelement |
| **6** | Niederhaltereinrichtung | **35** | Zweites Gehäuseelement |
| **7** | Aufsammeltrommel | **36** | Spannrolle |
| **8** | Querförderschnecke | **37** | Spannsystem |
| **9** | Einzugsorgan | **38** | Welle |
| **10** | Einzugswalze | **39** | Hohlwelle |
| **11** | Vorpresswalze | **39a** | Wellenabschnitt |
| **12** | Häckseltrommel | **39b** | Wellenabschnitt |
| **13** | Häckselmesser | **40a** | Befestigungsabschnitt |
| **14** | Gegenschneide | **40b** | Befestigungsabschnitt |
| **15** | Crackerwalzen | **41a** | Lagerabschnitt |
| **16** | Nachzerkleinerungseinrichtung | **41b** | Lagerabschnitt |
| **17** | Nachbeschleuniger | **42** | Wälzlager |
| **18** | Auswurfschacht | **43a** | Flanschabschnitt |
| **19** | Auswurfkrümmer | **43b** | Flanschabschnitt |
| **20** | Arbeitsorgan | **44a** | Innenverzahnung |
| **23** | Erste Hydraulikeinheit | **44b** | Innenverzahnung |
| **24** | Zweite Hydraulikeinheit | **45** | Steg |
| **25** | Antriebsmotor | **46** | Stützelement |
| **26** | Abtriebsriemenscheibe | **47** | Antriebswelle |
| **27** | Antriebsriemen | **48** | Verbindungsabschnitt |
| **28** | Antriebsriemenscheibe | | |
| **29** | Antriebssystem | | |

## Patentansprüche

1. Antriebssystem (29) für eine selbstfahrende Erntemaschine (1, 2), umfassend einen als Verbrennungsmotor ausgeführten Antriebsmotor, eine von dem Antriebsmotor (25) angetriebene erste Abtriebsriemenscheibe (26), welche mittels eines Antriebsriemens (27) zumindest eine Antriebsriemenscheibe (28) eines Arbeitsorganes (20) treibt, sowie zumindest eine erste und eine zweite Hydraulikeinheit (23, 24), **dadurch gekennzeichnet, dass** der Antriebsriemen (27) mit einer Riemenscheibe (33) trieblich verbunden ist, welche von einander gegenüberliegend angeordneten, relativ zu der Riemenscheibe (33) feststehenden Gehäuseelementen (34, 35) abschnittsweise umgeben ist, an denen die erste Hydraulikeinheit (23) und die zweite Hydraulikeinheit (24) angeordnet sind, welche mit einer die Riemenscheibe (33) durchdringenden Welle (38) trieblich verbunden sind.

2. Antriebssystem (29) nach Anspruch 1, **dadurch gekennzeichnet, dass** die Welle (38) in den Gehäuseelementen (34, 35) gelagert ist.

3. Antriebssystem (29) nach einem der Ansprüche 1 oder 2, **dadurch gekennzeichnet, dass** die Welle (38) einteilig ausgeführt ist.

4. Antriebssystem (29) nach einem der Ansprüche 1 oder 2, **dadurch gekennzeichnet, dass** die Welle (38) als Hohlwelle (39) ausgeführt ist, die zwei separate Wellenabschnitte (39a, 39b) aufweist.

5. Antriebssystem (29) nach Anspruch 4, **dadurch gekennzeichnet, dass** der jeweilige Wellenabschnitt (39a, 39b) an einem Ende einen Flanschabschnitt (43a, 43b) aufweist, der mit einem sich radial nach innen erstreckenden Steg (45) an der Riemenscheibe (33) verbunden ist.

6. Antriebssystem (29) nach einem der Ansprüche 1 bis 5, **dadurch gekennzeichnet, dass** das jeweilige Gehäuseelement (34, 35) einen Lagerabschnitt (41a, 41b) aufweist, der der Aufnahme eines Wälzlagers (42) dient.

7. Antriebssystem (29) nach einem der Ansprüche 1 bis 6, **dadurch gekennzeichnet, dass** das jeweilige Gehäuseelement (34, 35) einen Befestigungsabschnitt (40a, 40b) aufweist, der der Anordnung der ersten Hydraulikeinheit (23) oder der zweiten Hydraulikeinheit (24) dient.

8. Antriebssystem (29) nach einem der Ansprüche 1 bis 7, **dadurch gekennzeichnet, dass** eines der beiden Gehäuseelemente (34, 35) einen sich in axialer Richtung, parallel zur Welle (38, 39) erstreckenden Verbindungsabschnitt (48) aufweist, der der Verbindung der beiden Gehäuseelemente (34, 35) miteinander dient.

9. Antriebssystem (29) nach Anspruch 8, **dadurch gekennzeichnet, dass** auf der dem Verbindungsabschnitt (48) gegenüberliegenden Seite ein Stützelement (46) zwischen den beiden Gehäuseelementen (40a, 40b) angeordnet ist.

10. Antriebssystem (29) nach Anspruch 9, **dadurch gekennzeichnet, dass** dem Stützelement (46) ein Spannsystem (37) zugeordnet ist.

11. Selbstfahrender Feldhäcksler (2) mit einem Antriebssystem (29) nach einem der der Ansprüche 1 bis 10.

## Claims

1. A drive system (29) for a self-propelled harvester (1, 2) including a drive engine in the form of an internal combustion engine, a first driven pulley (26) which is driven by the drive engine and which drives at least one drive pulley (28) of a working member by means of a drive belt (27), and at least a first and a second hydraulic unit (23, 24),
**characterised in that** the drive belt (27) is drivingly connected to a pulley (33) which is portion-wise surrounded by mutually oppositely disposed housing elements (34, 35) which are stationary relative to the pulley (33), on which housing elements are arranged the first hydraulic unit (23) and the second hydraulic unit (24) which are drivingly connected to a shaft (38) passing through the pulley (33).

2. A drive system (29) according to claim 1 **characterised in that** the shaft (38) is mounted in the housing elements (34, 35).

3. A drive system (29) according to one of claims 1 and 2 **characterised in that** the shaft (38) is in one piece.

4. A drive system (29) according to one of claims 1 and 2 **characterised in that** the shaft (38) is in the form of a hollow shaft (39) having two separate shaft portions (39a, 39b).

5. A drive system (29) according to claim 4 **characterised in that** at one end the respective drive portion (39a, 39b) has a flange portion (43a, 43b) connected to a radially inwardly extending web (45) on the pulley (33).

6. A drive system (29) according to one of claims 1 to 5 **characterised in that** the respective housing element (34, 35) has a bearing portion (41a, 41b) serving to accommodate a rolling bearing (42).

7. A drive system (29) according to one of claims 1 to 6 **characterised in that** the respective housing element (34, 35) has a fixing portion (40a, 40b) serving for the arrangement of the first hydraulic unit (23) or the second hydraulic unit (24).

8. A drive system (29) according to one of claims 1 to 7 **characterised in that** one of the two housing elements (34, 35) has a connecting portion (48) which extends in the axial direction parallel to the shaft (38, 39) and which serves to connect the two housing elements (34, 35) together.

9. A drive system (29) according to claim 8 **characterised in that** a support element (46) is arranged between the two housing elements (40a, 40b) on the side opposite to the connecting portion (48).

10. A drive system (29) according to claim 9 **characterised in that** a tensioning system (37) is associated with the support element (46).

11. A self-propelled forage harvester (2) comprising a drive system (29) according to one of claims 1 to 10.

## Revendications

1. Système d'entraînement (29) pour une machine de récolte automotrice (1, 2), comprenant un moteur d'entraînement réalisé sous la forme d'un moteur à combustion, une première poulie de sortie (26) entraînée par le moteur d'entraînement (25), laquelle entraîne par l'intermédiaire d'une courroie d'entraînement (27) au moins une poulie d'entraînement (28) d'un organe de travail (20), ainsi qu'au moins une première et une seconde unité hydraulique (23, 24), **caractérisé en ce que** la courroie d'entraînement (27) est reliée en entraînement à une poulie (33) qui est entourée sur certaines parties par des éléments de carter (34, 35) disposés l'un en face de l'autre, fixes par rapport à la poulie (33), sur lesquels sont disposées la première unité hydraulique (23) et la seconde unité hydraulique (24), lesquelles sont reliées en entraînement à un arbre (38) traversant la poulie (33).

2. Système d'entraînement (29) selon la revendication 1, **caractérisé en ce que** l'arbre (38) est monté dans les éléments de carter (34, 35).

3. Système d'entraînement (29) selon l'une des revendications 1 ou 2, **caractérisé en ce que** l'arbre (38) est réalisé d'une seule pièce.

4. Système d'entraînement (29) selon l'une des revendications 1 ou 2, **caractérisé en ce que** l'arbre (38) est réalisé sous la forme d'un arbre creux (39) qui comporte deux parties d'arbre (39a, 39b) séparées.

5. Système d'entraînement (29) selon la revendication 4, **caractérisé en ce que** la partie d'arbre (39a, 39b) respective comporte à une extrémité une partie bride (43a, 43b) qui est reliée à une nervure (45) s'étendant radialement vers l'intérieur sur la poulie (33).

6. Système d'entraînement (29) selon l'une des revendications 1 à 5, **caractérisé en ce que** l'élément de carter (34, 35) respectif comporte une partie palier (41a, 41b) qui sert à recevoir un roulement (42).

7. Système d'entraînement (29) selon l'une des revendications 1 à 6, **caractérisé en ce que** l'élément de carter (34, 35) respectif comporte une partie de fixation (40a, 40b) qui sert à disposer la première unité hydraulique (23) ou la seconde unité hydraulique (24).

8. Système d'entraînement (29) selon l'une des revendications 1 à 7, **caractérisé en ce qu'**un des deux éléments de carter (34, 35) comporte une partie de liaison (48) qui s'étend dans la direction axiale parallèlement à l'arbre (38, 39) et qui sert à relier les deux éléments de carter (34, 35) entre eux.

9. Système d'entraînement (29) selon la revendication 8, **caractérisé en ce que**, du côté opposé à la partie de liaison (48), un élément d'appui (46) est disposé entre les deux éléments de carter (40a, 40b).

10. Système d'entraînement (29) selon la revendication 9, **caractérisé en ce qu'**un système de serrage (37) est associé à l'élément d'appui (46).

11. Ensileuse automotrice (2) équipée d'un système d'entraînement (29) selon l'une des revendications 1 à 10.
